# EUROPEAN PATENT APPLICATION

(11) **EP 2 871 016 A2**
(43) Date of publication of application: **13.05.2015**
(21) Application number: 14189628.2
(22) Date of filing: 21.10.2014
(51) Int. Cl.: B23H 7/20, B23H 7/04

(54) **Wire-cut electrical discharge machining machine and method of machining therein**

(30) Priority: 07.11.2013 JP 2013231371
(71) Applicant: FANUC CORPORATION, Oshino-mura Minamitsuru-gun Yamanashi 401-0597 (JP)
(72) Inventor: Abe, Hiroyuki, Minamitsuru-gun, Yamanashi 401-0597 (JP)
(74) Representative: Ward, James Norman

(57) **Abstract**

A wire-cut electric discharge machining machine which machines an object to be machined based on a command of a machining program includes a machining condition storage unit for storing machining conditions, a machining program analyzing unit for analyzing a machining condition search command specified in the machining program and acquiring search conditions designated by the machining condition search command, a search unit for retrieving machining conditions from the machining condition storage unit based on the acquired search conditions, and a machining unit for machining based on the machining conditions chosen by the search unit.

## Description

### BACKGROUND OF THE INVENTION

### 1. Field of the Invention

The present invention relates to a wire-cut electrical discharge machining (EDM) machine and the method of machining therein, and particularly to a wire-cut EDM machine which automatically sets machining conditions.

### 2. Description of the Related Art

In wire-cut EDM machines, in which a workpiece as an object to be machined is machined by moving a wire electrode and the workpiece relative to each other based on a command of a machining program, increased machining speed, improved machining accuracy, and the like have enabled high-speed and high-accuracy machining of dies and the like. Setting optimal machining conditions is important to carrying out high-speed and high-accuracy machining. There are various kinds of machining conditions, and settings for machining conditions are made using a number of control parameters.

Optimal machining conditions (setting data on control parameters) vary depending on the material and thickness of a wire electrode to be used in wire electrical discharge machining, the material and thickness of a workpiece as an object to be machined, the installation environment of the workpiece in a wire-cut EDM machine, desired machining speed and finish accuracy, functions possessed by the series (group of machines having the same basic functions) and type (presence or absence of additional functions) of the machine, and the like. Such machining conditions are preset and prestored in a controller of the wire-cut EDM machine by the manufacturer that produces and sells the wire-cut EDM machine, and generally called "manufacturer's machining conditions". In general, a set of conditions are selected and set among the manufacturer's machining conditions. In another known method, the rewriting and adding of machining conditions are allowed, and machining conditions for machining operations carried out in the past are stored and utilized.

In one known method for selecting and setting machining conditions, data for search, such as the plate thickness of a plate material to be machined, wire electrode diameter, and machined surface roughness value, is inputted to search prestored machining conditions, and optimal machining conditions corresponding to the inputted data are set as active machining conditions.

For example, in a wire-cut EDM machine disclosed in Japanese Patent Application Laid-Open No. 64-64721, data on various kinds of machining conditions used in past machining operations is accumulated in a machining history memory unit, and the plate thickness of a plate material to be machined, wire electrode diameter, and required machined surface roughness value are inputted to search machining conditions in the machining history memory unit, and optimal machining conditions are selected and used. Moreover, in a method disclosed in Japanese Patent Application Laid-Open No. 5-220625, when data such as numeric values is inputted to condition items which are workpiece material, workpiece thickness, and wire diameter, all machining conditions including the inputted data are extracted from conditions registered in the past and are displayed in a machining condition list, then operator selects optimal conditions from the displayed machining condition list to set machining conditions.

Further, in a machining condition setting method disclosed in Japanese Patent Application Laid-Open No. 6-315833, basic data on various kinds of machining conditions experimentally found in advance is stored. When setting data on machining program number, wire diameter, workpiece material, workpiece plate thickness, and nozzle clearance is inputted, a correlation graph created using the basic data on machining conditions to represent the correlation between machining speed and machining accuracy (dimensional accuracy) is displayed. When machining speed and machining accuracy are designated on the correlation graph with a cursor, actual machining conditions are determined and displayed based on the basic data on machining conditions, the setting data, and the machining speed and the machining accuracy designated with the cursor.

Moreover, in a machining condition setting method disclosed in Japanese Patent Application Laid-Open No. 2007-69330, standard machining condition data and custom machining condition data added by a user are set and registered. When data on wire material, wire diameter, workpiece material, and workpiece thickness is inputted, and machining speed and machining accuracy are designated, a number of sets of machining condition data which have been set and registered in correspondence with the input data are displayed. One of the displayed sets of machining condition data is selected as active machining conditions, and machining is carried out. If the result of machining does not satisfy desired conditions, machining conditions are manually changed, and machining is carried out again. This process is repeated. If a desired result is obtained, the machining conditions are registered as custom machining condition data together with information on machining accuracy and machining speed.

Furthermore, other than the above-described methods in which data for search such as workpiece plate thickness, wire electrode diameter, and machined surface roughness value is inputted to search and set machining conditions, the following method has been known: a machining condition registration code is provided for each of machining conditions, and machining conditions are designated in a machining program using machining condition registration codes to set machining conditions.

Moreover, the following method has also been known: a set of machining conditions are designated and read out by a machining program using a machining condition invocation code, and set as active machining conditions.

In the methods in which data for search is manually inputted and in which stored machining conditions are searched based on the inputted data for search to select and set a set of machining conditions, workpiece type, workpiece thickness, wire electrode material, wire electrode diameter, machined surface roughness value, and the like need to be manually inputted as data for search. This reduces efficiency.

Moreover, in the method in which each of machining conditions is designated in a machining program using a machining condition registration code to set a set of active machining conditions, there are cases where functions possessed by the series or type of the wire-cut EDM machine cannot be used. Further, when the data structure of machining conditions has been changed, e.g., when control parameters for machining conditions have been changed to ones having new meanings, there are cases where the machining condition registration codes become unusable. In such cases, a machining program needs to be re-created. This reduces efficiency.

A disadvantage of the method in which a set of machining conditions of stored machining conditions are read out and set using a machining condition invocation code is that machining condition numbers added to machining condition invocation codes need to be created in a database. Moreover, there are cases where a function possessed by the series or type of the machine is not available to a machining condition invocation code number in a machining program. Further, when the data structure of machining conditions has been changed, there are cases where the machining condition invocation codes become unusable. In such cases, a machining program needs to be re-created. This reduces efficiency.

### SUMMARY OF THE INVENTION

Accordingly, an object of the present invention is to provide a wire-cut electric discharge machining machine to which data for searching machining conditions does not need to be manually inputted and which uses a machining program that, once created, always allows machining to be carried out with optimal machining conditions set even in a machine of a different series or type.

A wire-cut electric discharge machining machine according to the present invention is configured to machine an object to be machined by moving a wire electrode and the object to be machined relative to each other based on a command of a machining program, and includes the following: machining condition storage unit configured to store machining conditions; machining program analyzing unit configured to analyze a machining condition search command specified in the machining program and acquiring search conditions designated by the machining condition search command; search unit configured to choose machining conditions from the machining condition storage unit based on the acquired search conditions; and machining unit configured to machine the objects based on the machining conditions chosen by the search unit. Thus, in accordance with a command from the machining program, machining conditions can be searched to set active machining conditions. The machining conditions stored in the machining condition storage unit may be generally-used manufacturer's machining conditions pre-registered by the manufacturer of the wire-cut electric discharge machine.

A method of machining in a wire-cut electric discharge machining machine according to the present invention, is configured to machine an object to be machined by moving a wire electrode and the object to be machined relative to each other based on a command of a machining program, the method comprising the steps of: storing machining conditions; analyzing a machining condition search command specified in the machining program; acquiring search conditions designated by the machining condition search command; choosing machining conditions from the machining condition storage unit based on the acquired search conditions; and machining the object based on the chosen machining conditions. A wire-cut electric discharge machining machine according to the present invention is configured to carry out the method above.

In the present invention, with the above-described configuration or steps, requirements determining machining conditions are designated as search conditions by the machining condition search command of the machining program, the machining conditions stored in the machining condition storage units are searched using the search conditions, and optimal machining conditions are selected to be set as active machining conditions. Accordingly, there is no need to manually input the search conditions on a setting screen at an electrical discharge machining site, and efficiency to product completion can be improved. Moreover, since the machining conditions are searched using he search conditions which are requirements determining machining conditions, the machining program does not need to be re-created and can be used without any change even in a wire-cut electric discharge machining machine of a different series or type. This improves efficiency.

### BRIEF DESCRIPTION OF THE DRAWINGS

These and other objects and features of the present invention will become apparent from the following description of exemplary embodiments with reference to the accompanying drawings in which:
FIG. 1 is a diagram schematically illustrating one embodiment of the present invention;
FIG. 2 is a block diagram illustrating a principal part of one embodiment of the present invention; and
FIG. 3 is a flowchart illustrating the algorithm of a machining condition setting process in the embodiment.

### DETAILED DESCRIPTION OF THE PREFERRED EMBODIMENTS

In one embodiment of the present invention, an optimal set of machining conditions can be automatically selected and set among pre-registered machining conditions, particularly among manufacturer's machining conditions. The manufacturer's machining conditions are preset and prestored in a controller of a wire-cut EDM machine by the manufacturer that produces and sells the wire-cut EDM machine. With regard to the machining conditions, as described previously, optimal machining conditions are dependent on requirements determining machining conditions such as the diameter of a wire electrode to be used in wire electrical discharge machining, the material and thickness of a workpiece as an object to be machined, the installation environment of the workpiece in the wire-cut EDM machine, and desired machining speed and finish accuracy Accordingly, optimal machining conditions corresponding to requirements determining machining conditions such as wire electrode diameter and workpiece material and thickness are set and registered in the controller of the wire-cut EDM machine by the manufacturer. Thus, by using the requirements determining machining conditions as machining condition search information and designating the machining condition search information, a set of machining conditions corresponding to the machining condition search information can be selected and set. In one embodiment of the present invention, the machining condition search information is designated in a machining program. This eliminates manual setting and, even in a machine of a different series or type, makes it possible to select and set optimal machining conditions suitable for the machine.

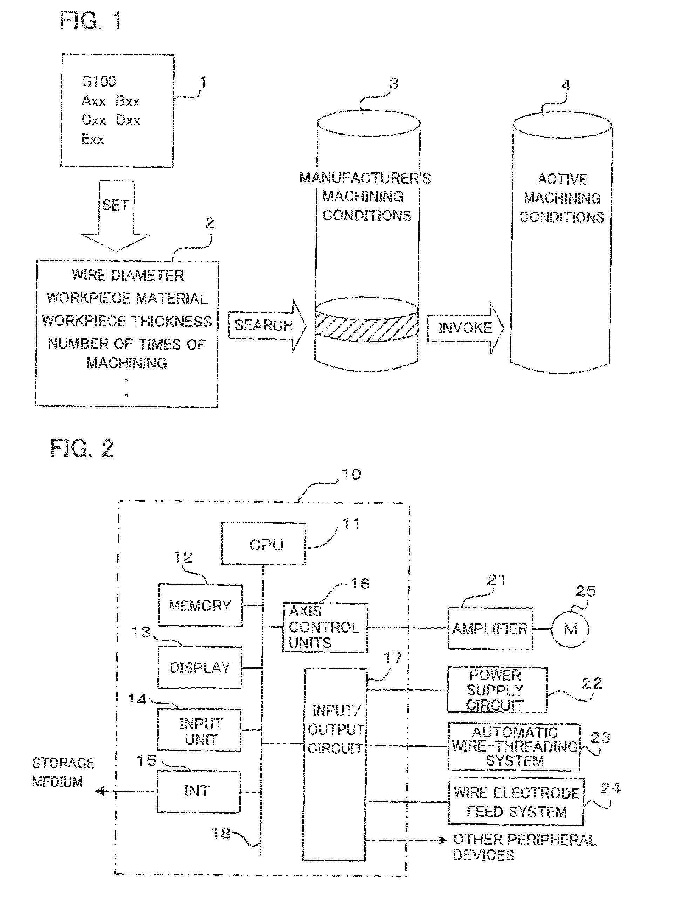

FIG. 1 is a diagram schematically illustrating one embodiment of the present invention. Manufacturer's machining conditions are stored in a memory unit 3 in a controller of a wire-cut EDM machine. A machining program 1 contains a command code for searching, selecting, and setting machining conditions. This command code is written in G code or M code, which is used in NC programs. The machining condition search command is configured as follows:
G100AxxBxxCxxDxxExx...

The arguments Axx, Bxx, ... are data for retrieving and registering machining conditions, and are search conditions including information on requirements determining machining conditions. Examples of A to G are the following:
A: wire diameter
B: workpiece material
C: workpiece thickness
D: the number of times of machining
E: product type, male or female
F: surface roughness
G: machined shape accuracy
When a machining condition search command
(G100AxxBxxCxxDxxExx...) is read from the machining program 1, the command is analyzed, search conditions 2 specified by arguments A, B, C, ... are registered, manufacturer's machining conditions are searched using the registered search conditions, and a set of machining conditions are invoked and set as active machining conditions in a machining carrying-out section 4. The wire-cut EDM machine carries out machining under the machining conditions set as described above.

FIG. 2 is a block diagram illustrating a principal part of one embodiment, mainly illustrating a controller of a wire-cut EDM machine. Reference numeral 10 denotes the controller for controlling the wire-cut EDM machine. The controller 10 is a numerical control unit in this embodiment. The numerical control unit 10 includes a processor (CPU) 11 and the following components, which are connected to the processor 11 through a bus 18: a memory 12 such as a ROM, a RAM, or an SRAM; a display 13; an input unit 14 such as a keyboard; an interface 15 through which a machining program that is an NC program and the like are inputted from or outputted to an external storage medium; axis control unit 16; an input/output circuit 17; and the like. The machining program (NC program) is read through the interface 15 to be stored in the memory 12, and the CPU 11 executes the machining program stored in the memory.

The axis control unit 16 is configured to control motors which drive the following axes, respectively: X and Y axes for driving a table, on which a workpiece is mounted, in the X-axis and Y-axis directions perpendicular to each other; a Z axis for moving an upper guide in a direction perpendicular to the X and Y axes; and U and V axes for taper cutting which are perpendicular to each other. The axis control unit 16 includes unit for feedback control of the position, speed, and current of each axis, and the like. For each axis, a servo motor 25 is connected to the axis control unit 16 through a servo amplifier 21. It should be noted that each servo motor has a position and speed sensor attached thereto so that the position and the speed may be fed back to a corresponding axis control circuit, but the position and speed sensor is omitted in FIG. 2.

Moreover, the input/output circuit 17 is connected to a power supply circuit 22 for applying a voltage between a wire of the wire-cut EDM machine and a workpiece to cause discharges, an automatic wire-threading system 23 for threading the wire electrode through an insertion hole as a workpiece machining start hole, a wire electrode feed system 24 for feeding the wire electrode, and other peripheral devices.

In the memory 12 of the numerical control unit 10, requirements determining machining conditions are registered as machining condition search information, and optimal machining conditions are set and registered as manufacturer's machining conditions in correspondence with the search information.

The above-described configuration of the wire-cut EDM machine is not different from a publicly known configuration of a wire-cut EDM machine. This embodiment provides a function which allows pre-registered machining conditions to be designated in a machining program and automatically set.

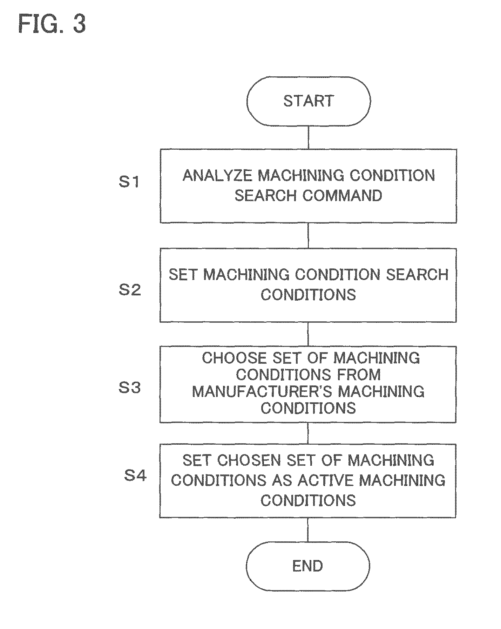

FIG. 3 is a flowchart illustrating the algorithm of a machining condition setting process which the CPU 11 carries out when a machining condition search command is read from a machining program.

When a machining condition search command (G100AxxBxxCxxDxxExx...) is read from a machining program, the command is analyzed (step S1). Then, search conditions (wire diameter, workpiece material, workpiece thickness, the number of times of machining, male type or female type, surface roughness, machined shape accuracy) specified by arguments A, B, C, ... of the command are read out and set (step S2). Subsequently, the manufacturer's machining conditions set and stored in the memory 12 are searched using the search conditions (step S3). After that, a set of machining conditions matching the search conditions are read out and set as active machining conditions (step S4). Then, this machining condition setting process is terminated. After that, the wire-cut EDM machine carries out machining under the active machining conditions.

As described above, machining conditions are searched based on information for retrieving and setting machining conditions which is specified in a machining program. This eliminates the necessity of manually inputting information for searching machining conditions using a display screen every time machining is carried out. Accordingly, efficiency to product completion is improved. Moreover, requirements determining machining conditions are specified as machining condition search conditions in the machining program, and machining conditions are searched based on the search conditions. Thus, machining can be performed with optimal machining conditions set even in a wire-cut EDM machine of a different series or type.

It should be noted that in this embodiment, generally-used manufacturer's machining conditions are stored in the memory unit, the manufacturer's machining conditions are searched, and a set of machining conditions are selected from the manufacturer's machining conditions and set as active machining conditions. However, in the case where a user or the like adds new machining conditions to the manufacturer's machining conditions, two or more sets of machining conditions are chosen in a search. In such a case, a newest one of the chosen sets of machining conditions may be selected and set as active machining conditions. Moreover, in the case where original machining conditions are used without using manufacturer's machining conditions in this embodiment, a set of machining conditions are stored for each set of requirements (search conditions) determining machining conditions.

## Claims

1. A wire-cut electric discharge machining machine configured to machine an object to be machined by moving a wire electrode and the object to be machined, relative to each other based on a command of a machining program, the wire-cut electric discharge machining machine comprising:
machining condition storage unit configured to store machining conditions;
a machining program analyzing unit configured to analyze a machining condition search command specified in the machining program and acquiring search conditions designated by the machining condition search command;
a search unit configured to choose machining conditions from the machining condition storage unit based on the acquired search conditions; and
a machining unit configured to machine the object based on the machining conditions chosen by the search unit.

2. The wire-cut electric discharge machining machine according to claim 1, wherein the machining conditions stored in the machining condition storage unit are manufacturer's machining conditions pre-registered by a manufacturer of the wire-cut electric discharge machining machine.

3. A method of machining in a wire-cut electric discharge machining machine configured to machine an object to be machined by moving a wire electrode and the object to be machined relative to each other based on a command of a machining program, the method comprising the steps of
storing machining conditions;
analyzing a machining condition search command specified in the machining program;
acquiring search conditions designated by the machining condition search command;
choosing machining conditions from the machining condition storage unit based on the acquired search conditions; and
machining the object based on the chosen machining conditions.

4. A wire-cut electric discharge machining machine configured to carry out the method according to claim 3.
